# EUROPEAN PATENT SPECIFICATION

(11) **EP 3 785 685 B1**
(45) Date of publication and mention of the grant of the patent: **20.11.2024**
(21) Application number: 18919861.7
(22) Date of filing: 07.06.2018
(51) Int. Cl.: A61G 5/08, B62K 15/00

(54) **COLLAPSIBLE SUPPORT FRAME**
ZUSAMMENKLAPPBARER TRAGRAHMEN
CADRE DE SUPPORT PLIABLE

(30) Priority: 25.05.2018 CN 201810515329
(43) Date of publication of application: 03.03.2021
(73) Proprietor: Guangdong Prestige Technology Company Limited, Dongguan City, Guangdong Province (CN)
(72) Inventor: ZHANG, Zhao, Dongguan, Guangdong 523960 (CN)
(74) Representative: Meyer, Thorsten
(86) International application number: PCT/CN2018/090211
(87) International publication number: WO 2019/223027

(56) References cited:
- CN-A- 107 049 639
- CN-U- 202 409 312
- CN-U- 202 459 184
- CN-Y- 2 827 340
- US-A- 3 887 228
- US-A1- 2014 125 036
- US-A1- 2017 224 558

## Description

### FIELD OF THE INVENTION

The present invention relates to a collapsible support frame, and more particularly to a collapsible support frame with a simple structure and convenient folding.

### BACKGROUND OF THE INVENTION

The volume of a wheelchair is generally very large, thus it's usually to fold the wheelchair for reduce the volume to facilitate storage. However, the existing collapsible wheelchairs are generally folded manually. Because the folding frames of the wheelchair are complicated, the folding actions and operations are cumbersome. Therefore, for people with mobility difficulties, manual operation spends a lot of time and effort. As a result, it is inconvenient for those who are inconvenient or physically disabled. Examples of folding structures using a collapsible intermediate component are known from US2014/125036, US3887228, and CN2827340. An example of actuator- aided folding of support-frame elements is known from and CN107049639.

### SUNIMARY OF THE INVENTION

One objective of the present invention is to provide a collapsible support frame with simple structure, and convenient folding and unfolding operations.

To achieve the above-mentioned objective, the present invention provides a collapsible support frame including a first support frame, a second support frame, a first horizontal rod, a second horizontal rod, and a telescopic device. Wherein one end of the first support frame is pivotally connected to one end of the second support frame, another end of the first frame is pivotally connected to one end of the first horizontal rod, another end of the second support frame is pivotally connected to one end of the second horizontal rod, another end of the first horizontal rod is pivotally connected to another end of the second horizontal rod, the telescopic device is pivotally connected to the first support frame, and a telescopic end of the telescopic device is pivotally connected to either the first horizontal rod or the second horizontal rod.

In present invention, the first support frame, the second support frame, the first horizontal rod, and the second horizontal rod are pivotally connected with each other to form a quadrilateral support frame, and a telescopic device is arranged between the first support frame and the first or the second horizontal, so that the quadrilateral support frame can be unfolded or folded as the telescopic device is retracted or extended. The structure of the collapsible support frame is simple, which is applicable to use in various collapsible apparatus to obtain a convenient operation.

Preferably, an elongated slot is provided on either the first horizontal rod or the second horizontal rod that is pivotally connected to the telescopic end, the telescopic end is provided with a shaft pin which is slidably arranged in the elongated slot.

Specifically, the collapsible support frame includes a limiting member movably arranged on either the first horizontal rod or the second horizontal rod that is pivotally connected to the telescopic end, thereby locking or unlocking the shaft pin in the elongated slot. Therefore, when the limiting member is in a position to limit the shaft pin, the telescopic device can be actuated to push the first or the second horizontal rod, so that the entire collapsible support frame can be folded or unfolded automatically. When the limiting member is in the position where the shaft pin is released, the shaft pin can slide in the elongated slot, thereby avoiding the restriction of the telescopic device on the first horizontal rod, and making the entire collapsible support frame can be folded or unfolded manually.

Specifically, the limiting member includes a main body and a limiting portion connected to the main body, the main body is pivotally connected to either the first horizontal rod or the second horizontal rod that is pivotally connected to the telescopic end, and the limiting portion is engaged with the shaft pin. In such a way, the shaft pin is locked by the limiting member and the front end of the elongated slot, thus the shaft pin and the horizontal rod can be relatively fixed.

Specifically, the limiting portion is provided with a guiding inclined surface. When the shaft pin slides from one end of the elongated slot to the other end that is engaged with the limiting portion, under the pushing force of the shaft pin, the limiting member is driven to rotate and open by the guiding inclined surface, so that the shaft pin can normally slide to the position engaged with the limiting portion.

Specifically, the limiting member further comprises an operating handle fixed to the main body. When manually operating the operating handle, the limiting member can be rotated.

Specifically, the collapsible support frame further includes an elastic reset member adapted for driving the limiting member to automatically lock with the shaft pin.

Specifically, the elastic reset member is a torsion spring.

Preferably, one end of the first horizontal rod is provided with a first abutting portion, one end of the second horizontal rod is provided with a second abutting portion, and the first abutting portion and the second abutting portion abut against one another when the first horizontal rod and the second horizontal rod are unfolded one another. In such a way, the first horizontal rod and the second horizontal rod can be mutually restricted when fully unfolded, and the collapsible support frame can stay in a stable condition.

### BRIEF DESCRIPTION OF THE DRAWINGS

The accompanying drawings facilitate an understanding of the various embodiments of this invention. In such drawings:
Fig. 1 is a perspective view of a collapsible support frame according to one embodiment of the present invention;
Fig. 2 is an exploded view of a collapsible support frame according to one embodiment of the present invention;
Fig. 3 is a connection structure diagram of the first horizontal rod and the second horizontal rod of the collapsible support frame of the present invention;
Fig.4 is s a condition of the first horizontal rod and the second horizontal rod of the collapsible support frame of the present invention, when they are automatically folded;
Fig. 5 is a condition of the first horizontal rod and the second horizontal rod of the collapsible support frame of the present invention, when they are manually folded;
Fig. 6 is a perspective view of the collapsible support frame of the present invention applied to a folding scooter;
Fig. 7 is a state diagram of the folding scooter of the present invention when it is unfolded; and
Fig. 8 is a state diagram of the folding scooter of the present invention when it is folded.

### DETAILED DESCRIPTION OF ILLUSTRATED EMBODIMENTS

A distinct and full description of the technical solution of the present invention will follow by combining with the accompanying drawings.

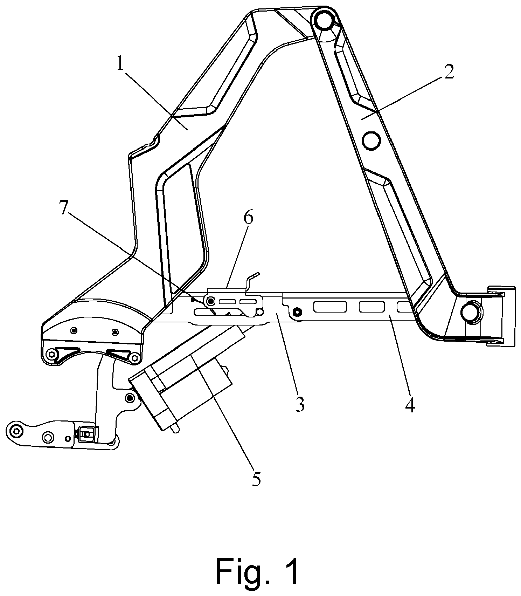

As shown in Figs. 1, 2 and 3, a collapsible support frame of the present invention includes a first support frame 1, a second support frame 2, a first horizontal rod 3, a second horizontal rod 4, and a telescopic device 5. One end of the first support frame 1 is pivotally connected to one end of the second support frame 2, another end of the first frame 1 is pivotally connected to one end of the first horizontal rod 3, another end of the second support frame 2 is pivotally connected to one end of the second horizontal rod 4, another end of the first horizontal rod 3 is pivotally connected to another end of the second horizontal rod 4, the telescopic device 5 is pivotally connected to the first support frame 1, and a telescopic end 52 of the telescopic device 5 is pivotally connected to either the first horizontal rod 3 or the second horizontal rod 4.

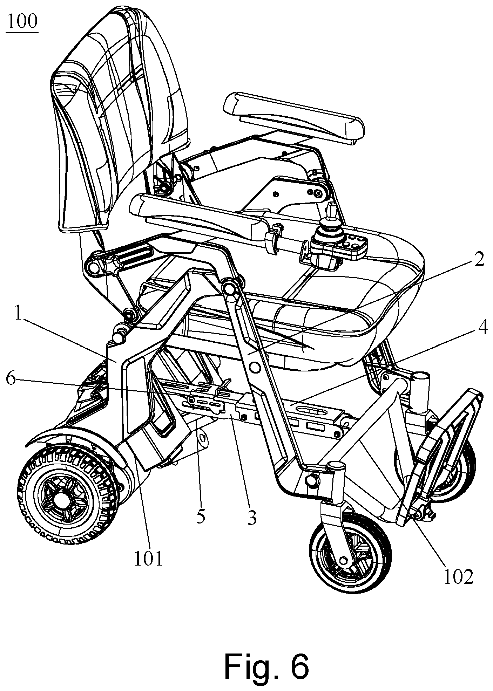

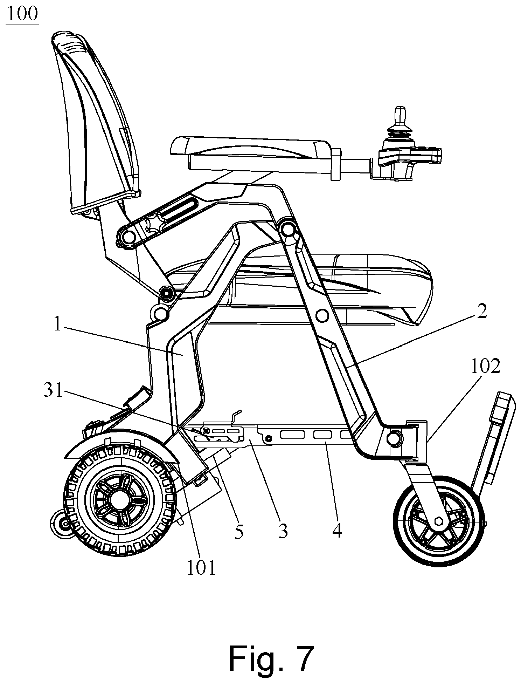

As shown in Fig. 6 and 7, when the collapsible support frame is applied to a collapsible wheelchair 100, the two first support frames 1 are the rear legs, the two second support frame 2 are the two front legs, and the first support frames 1 and the second support frames 2 are located on both sides of the collapsible wheelchair 100. The lower ends of the two first support frames 1 are fixed to the rear wheel support frame 101 of the collapsible wheelchair 100, and the lower ends of the two second support frames 2 are pivotally connected to the front wheel support frame 102 of the collapsible wheelchair 100. The first horizontal rod 3 and the second horizontal rod 4 are located in the middle of the lower part of the collapsible wheelchair 100, and the rear end of the first horizontal rod 3 is pivotally connected to the rear wheel support frame 101. The front end of the second horizontal rod 4 is pivotally connected to the front wheel support frame 102. The telescopic device 5 in this embodiment is an electric push rod, which is pivotally connected to the rear wheel support frame 101, and the telescopic device 5 having a telescopic end 52 pivotally connected to the first horizontal rod 3.

With reference to Figs. 1, 2, 3 and 6, the first horizontal rod 3 and the second horizontal rod 4 are both inverted U-shaped structures, and an elongated slot 31 is formed on a side of the first horizontal rod 3, and extended along the length of the first horizontal rod 3. The telescopic end 52 is provided with a shaft pin 51, the central axis of the shaft pin 51 is perpendicular to the central axis of the telescopic end 52, and the shaft pin 51 is slidably disposed in the elongated slot 31. Preferably, the collapsible support frame further includes a limiting member 6 which is in an inverted U-shaped structure, and movably arranged on the first horizontal rod 3, thereby locking or unlocking the shaft pin 51 in the elongated slot 31. Specifically, the limiting member 6 is pivotally connected to the first horizontal rod 3, and includes a main body 61 and a limiting portion 62 connected to the main body 61. More specifically, the main body 61 is pivotally connected to the horizontal rod that is pivotally connected to the telescopic end 52 by a rotating shaft; the front side of the limiting portion 62 is blocked in the extending direction of the elongated slot 31, so as to engage with and lock with the shaft pin 51, together with the front end of the elongated slot 31. Further, the limiting portion 62 is provided with a guiding inclined surface 63. When the shaft pin 51 slides from one end of the elongated slot 31 to the other end that is engaged with the limiting portion 62, under the pushing force of the shaft pin 51, the limiting member 6 is driven to rotate and open by the guiding inclined surface 63, so that the shaft pin 51 can normally slide to the position engaged with the limiting portion 62. The limiting member 6 further includes an operating handle 64 which is fixed to the main body 61. When manually operating the operating handle 64, the limiting member 6 can be rotated. Preferably, the collapsible support frame further includes an elastic reset member 7 which is a torsion spring by which the limiting member 6 is driven to be automatically locked with the shaft pin 51.

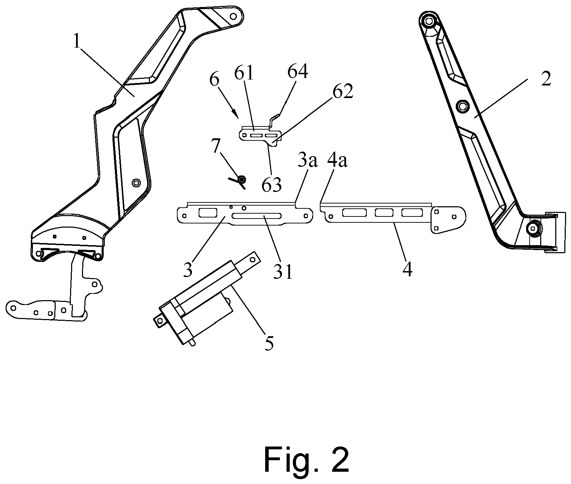

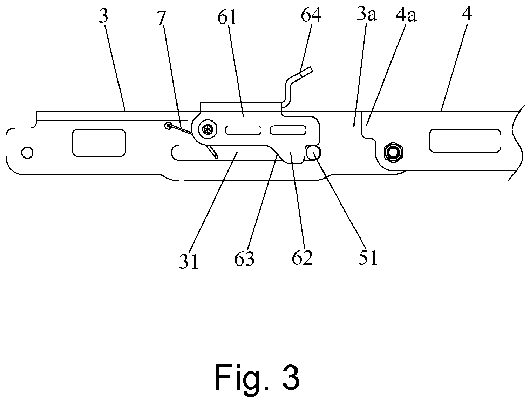

Referring to Fig. 2 and 3 again, the other end of the first horizontal rod 3 is provided with a first abutting portion 3a, the other end of the second horizontal rod 4 is provided with a second abutting portion 4a, and the first abutting portion 3a and the second abutting portion 4a abut against one another when the first horizontal rod 3 and the second horizontal rod 4 are unfolded one another. In such a way, the first horizontal rod 3 and the second horizontal rod 4 can be mutually restricted when fully unfolded, and the collapsible support frame can stay in a stable condition.

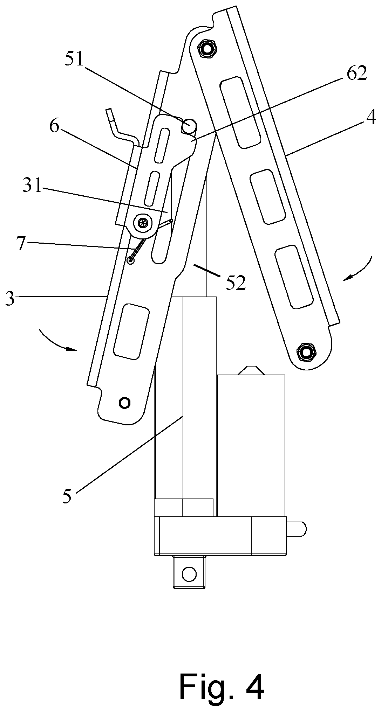

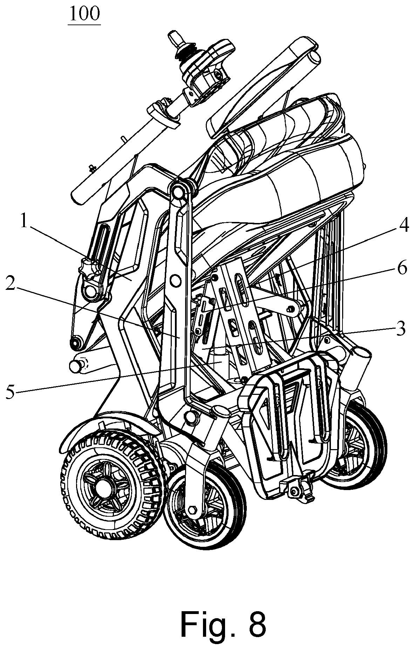

Please refer to Figs. 4, 7 and 8 again, when the collapsible wheelchair 100 is automatically folded, it is only necessary to control the telescopic end 52 of the telescopic device 5 to extend. At this time, the shaft pin 51 is locked by the limiting member 6 and the front end of the elongated slot 31. When the extended telescopic end 52 of the telescopic device 5 pushes the front end of the first horizontal rod 3, the front end of the first horizontal rod 3 swings upward to drive the second horizontal rod 4 swings upwards accordingly. At this time, the first horizontal rod 3 and the second horizontal rod 4 move closer to each other, accordingly, the rear end of the first horizontal rod 3 drives the first support frame 1 to rotate bout the pivotal center of the upper end thereof to close toward the middle, and the front end of the second horizontal rod 4 drives the second support frame 2 to rotate about the pivotal center of the upper end thereof to close toward the middle. Finally, the first horizontal rod 3, the second horizontal rod 4, the first support frame 1, the second support frame 2 and the telescopic device 5 are moved close one another to achieve the folding. When the collapsible wheelchair 100 is automatically unfolded, it is only necessary to control the telescopic end 52 of the telescopic device 5 to retract, so that the first horizontal rod 3, the second horizontal rod 4, the first support frame 1 and the second support frame 2 can move in an opposite direction of the folding operation until the first abutting portion 3a and the second abutting portion 4a abut against each other, so that the collapsible wheelchair 100 can be fully unfolded.

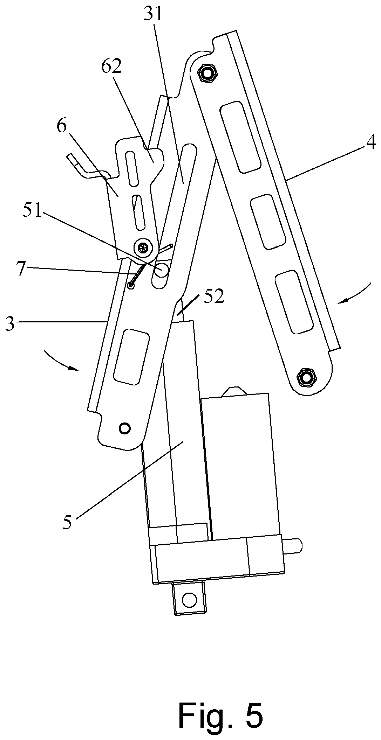

Referring to Figs. 5, 7 and 8, when the collapsible wheelchair 100 is manually folded, the operating handle 64 is operated to rotate the limiting member 6, thereby driving the limiting portion 62 away from the elongated slot 31, causing the shaft pin 51 of the telescopic end 52 to release and be slidable in the elongated slot 31. At this time, the first support frame 1 and the second support frame 2 are manually moved closer to each other, during the movement, the shaft pin 51 slides from a first end of the elongated slot 31 to a second end of the elongated slot 31, thereby realizing the manual folding. When the collapsible wheelchair 100 is manually unfolded, it is only necessary to manually unfold the first support frame 1, the second support frame 2, the first horizontal rod 3, and the second horizontal rod 4 to each other. In this process, the shaft pin 51 slides from the second end of the elongated slot 31 to the first end of the elongated slot 31, accordingly, the guide inclined surface 63 pushes the limiting portion 62 to cause the limiting portion 62 rotates upward to avoid the shaft pin 51, so that the shaft pin 51 engages with the first end of the elongated slot 31 and the limiting portion 62 again, and the first abutting portion 3a and the second abutting portion 4a abut against each other, so far, the collapsible wheelchair 100 is fully unfolded.

In present invention, the first support frame 1, the second support frame 2, the first horizontal rod 3, and the second horizontal rod 4 are pivotally connected with each other to form a quadrilateral support frame, and a telescopic device 5 is arranged between the first support frame 1 and the horizontal rod 3, so that the collapsible wheelchair 100 can be unfolded or folded as the telescopic device 5 is retracted or extended. In addition, a limiting member 6 is movably arranged, therefore, when the limiting member 6 is in a position to limit the shaft pin 51, the shaft pin 51 can be relatively fixed with the first horizontal rod 3, and then the telescopic device 5 is actuated to push the first horizontal rod 3, so that the entire collapsible wheelchair 100 can be folded or unfolded automatically. When the limiting member 6 is in the position where the shaft pin 51 is released, the shaft pin 51 can slide in the elongated slot 31, thereby avoiding the restriction of the telescopic device 5 on the first horizontal rod 3, and making the collapsible wheelchair 100 can be folded or unfolded manually. The structure of the collapsible support frame is simple, and the operation of the collapsible wheelchair 100 is very convenient.

## Claims

1. A collapsible support frame, comprising a first support frame, a second support frame, a first horizontal rod, a second horizontal rod, and a telescopic device, wherein one end of the first support frame is pivotally connected to one end of the second support frame, another end of the first frame is pivotally connected to one end of the first horizontal rod, another end of the second support frame is pivotally connected to one end of the second horizontal rod, another end of the first horizontal rod is pivotally connected to another end of the second horizontal rod, the telescopic device is pivotally connected to the first support frame, and the telescopic device has a telescopic end which is configured to be extended or retracted from the telescopic device, and the telescopic end is pivotally connected to either the first horizontal rod or the second horizontal rod.

2. The collapsible support frame as claimed in claim 1, wherein an elongated slot is provided on either the first horizontal rod or the second horizontal rod that is pivotally connected to the telescopic end, the telescopic end is provided with a shaft pin which is slidably arranged in the elongated slot.

3. The collapsible support frame as claimed in claim 2, further comprising a limiting member movably arranged on either the first horizontal rod or the second horizontal rod that is pivotally connected to the telescopic end, thereby locking or unlocking the shaft pin in the elongated slot.

4. The collapsible support frame as claimed in claim 3, wherein the limiting member comprises a main body and a limiting portion connected to the main body, the main body is pivotally connected to either the first horizontal rod or the second horizontal rod that is pivotally connected to the telescopic end, and the limiting portion is engaged with the shaft pin.

5. The collapsible support frame as claimed in claim 4, wherein the limiting portion is provided with a guiding inclined surface.

6. The collapsible support frame as claimed in claim 4, wherein the limiting member further comprises an operating handle fixed to the main body.

7. The collapsible support frame as claimed in claim 3, further comprising an elastic reset member adapted for driving the limiting member to automatically lock with the shaft pin.

8. The collapsible support frame as claimed in claim 7, wherein the elastic reset member is a torsion spring.

9. The collapsible support frame as claimed in claim 1, wherein one end of the first horizontal rod is provided with a first abutting portion, one end of the second horizontal rod is provided with a second abutting portion, and the first abutting portion and the second abutting portion abut against one another when the first horizontal rod and the second horizontal rod are unfolded one another.

## Patentansprüche

1. Ein zusammenklappbarer Stützrahmen, bestehend aus einem ersten Stützrahmen, einem zweiten Stützrahmen, einer ersten Horizontalstange, einer zweiten Horizontalstange und einer teleskopischen Vorrichtung, wobei ein Ende des ersten Stützrahmens schwenkbar mit einem Ende des zweiten Stützrahmens verbunden ist, das andere Ende des ersten Stützrahmens schwenkbar mit einem Ende der ersten Horizontalstange verbunden ist, das andere Ende des zweiten Stützrahmens schwenkbar mit einem Ende der zweiten Horizontalstange verbunden ist, das andere Ende der ersten Horizontalstange schwenkbar mit dem anderen Ende der zweiten Horizontalstange verbunden ist, die teleskopische Vorrichtung schwenkbar mit dem ersten Stützrahmen verbunden ist und die teleskopische Vorrichtung ein teleskopisches Ende hat, das so konfiguriert ist, dass es aus der teleskopischen Vorrichtung heraus- oder zurückgezogen werden kann, und das teleskopische Ende schwenkbar entweder mit der ersten Horizontalstange oder der zweiten Horizontalstange verbunden ist.

2. Der zusammenklappbare Stützrahmen gemäß Anspruch 1, wobei ein länglicher Schlitz entweder an der ersten Horizontalstange oder der zweiten Horizontalstange vorgesehen ist, die schwenkbar mit dem teleskopischen Ende verbunden ist, wobei das teleskopische Ende mit einem Achsstift versehen ist, der in dem länglichen Schlitz verschiebbar angeordnet ist.

3. Der zusammenklappbare Stützrahmen gemäß Anspruch 2, ferner umfassend ein Begrenzungselement, das beweglich an entweder der ersten Horizontalstange oder der zweiten Horizontalstange angeordnet ist, die schwenkbar mit dem teleskopischen Ende verbunden ist, wodurch der Achsstift im länglichen Schlitz verriegelt oder entriegelt wird.

4. Der zusammenklappbare Stützrahmen gemäß Anspruch 3, wobei das Begrenzungselement einen Hauptkörper und einen mit dem Hauptkörper verbundenen Begrenzungsabschnitt umfasst, der Hauptkörper schwenkbar entweder mit der ersten Horizontalstange oder der zweiten Horizontalstange verbunden ist, die schwenkbar mit dem teleskopischen Ende verbunden ist, und der Begrenzungsabschnitt mit dem Achsstift in Eingriff steht.

5. Der zusammenklappbare Stützrahmen gemäß Anspruch 4, wobei der Begrenzungsabschnitt mit einer geneigten Führungsfläche versehen ist.

6. Der zusammenklappbare Stützrahmen gemäß Anspruch 4, wobei das Begrenzungselement ferner einen Betätigungsgriff umfasst, der am Hauptkörper befestigt ist.

7. Der zusammenklappbare Stützrahmen gemäß Anspruch 3, ferner umfassend ein elastisches Rückstellelement, das dazu ausgelegt ist, das Begrenzungselement anzutreiben, um sich automatisch mit dem Achsstift zu verriegeln.

8. Der zusammenklappbare Stützrahmen gemäß Anspruch 7, wobei das elastische Rückstellelement eine Torsionsfeder ist.

9. Der zusammenklappbare Stützrahmen gemäß Anspruch 1, wobei ein Ende der ersten Horizontalstange mit einem ersten Anschlagabschnitt versehen ist, ein Ende der zweiten Horizontalstange mit einem zweiten Anschlagabschnitt versehen ist, und der erste Anschlagabschnitt und der zweite Anschlagabschnitt gegeneinander stoßen, wenn die erste Horizontalstange und die zweite Horizontalstange auseinandergeklappt sind.

## Revendications

1. Un cadre de support pliable, comprenant un premier cadre de support, un deuxième cadre de support, une première tige horizontale, une deuxième tige horizontale et un dispositif télescopique, dans lequel une extrémité du premier cadre de support est reliée de manière pivotante à une extrémité du deuxième cadre de support, une autre extrémité du premier cadre est reliée de manière pivotante à une extrémité de la première tige horizontale, une autre extrémité du deuxième cadre de support est reliée de manière pivotante à une extrémité de la deuxième tige horizontale, une autre extrémité de la première tige horizontale est reliée de manière pivotante à une autre extrémité de la deuxième tige horizontale, le dispositif télescopique est relié de manière pivotante au premier cadre de support, et le dispositif télescopique a une extrémité télescopique configurée pour être étendue ou rétractée depuis le dispositif télescopique, et l'extrémité télescopique est reliée de manière pivotante soit à la première tige horizontale, soit à la deuxième tige horizontale.

2. Le cadre de support pliable selon la revendication 1, dans lequel une fente allongée est prévue soit sur la première tige horizontale, soit sur la deuxième tige horizontale, qui est reliée de manière pivotante à l'extrémité télescopique, l'extrémité télescopique étant pourvue d'un axe qui est disposé de manière coulissante dans la fente allongée.

3. Le cadre de support pliable selon la revendication 2, comprenant en outre un élément de limitation disposé de manière mobile soit sur la première tige horizontale, soit sur la deuxième tige horizontale, qui est reliée de manière pivotante à l'extrémité télescopique, verrouillant ou déverrouillant ainsi l'axe dans la fente allongée.

4. Le cadre de support pliable selon la revendication 3, dans lequel l'élément de limitation comprend un corps principal et une partie de limitation reliée au corps principal, le corps principal étant relié de manière pivotante soit à la première tige horizontale, soit à la deuxième tige horizontale, qui est reliée de manière pivotante à l'extrémité télescopique, et la partie de limitation étant engagée avec l'axe.

5. Le cadre de support pliable selon la revendication 4, dans lequel la partie de limitation est pourvue d'une surface inclinée de guidage.

6. Le cadre de support pliable selon la revendication 4, dans lequel l'élément de limitation comprend en outre une poignée de commande fixée au corps principal.

7. Le cadre de support pliable selon la revendication 3, comprenant en outre un élément de rappel élastique conçu pour entraîner l'élément de limitation à se verrouiller automatiquement avec l'axe.

8. Le cadre de support pliable selon la revendication 7, dans lequel l'élément de rappel élastique est un ressort de torsion.

9. Le cadre de support pliable selon la revendication 1, dans lequel une extrémité de la première tige horizontale est pourvue d'une première partie d'appui, une extrémité de la deuxième tige horizontale est pourvue d'une deuxième partie d'appui, et la première partie d'appui et la deuxième partie d'appui s'appuient l'une contre l'autre lorsque la première tige horizontale et la deuxième tige horizontale sont dépliées l'une par rapport à l'autre.
